# EUROPEAN PATENT SPECIFICATION

(11) **EP 2 043 036 B1**
(45) Date of publication and mention of the grant of the patent: **09.06.2010**
(21) Application number: 07116859.5
(22) Date of filing: 20.09.2007
(51) Int. Cl.: G06Q 20/00

(54) **System, method and device for enabling interaction with dynamic security**
System, Verfahren und Vorrichtung zur Ermöglichung von Interaktionen mit dynamischer Sicherheit
Système, procédé et dispositif pour autoriser une interaction avec une sécurité dynamique

(43) Date of publication of application: 01.04.2009
(73) Proprietor: TDS TODOS DATA SYSTEM AB, 414 58 Göteborg (SE)
(72) Inventor: Gullberg, Peter, SE-421 60, VÄSTRA FRÖLUNDA (SE)
(74) Representative: Fritsche, Daniel

(56) References cited:
- WO-A-01/82242
- WO-A-02/082387
- WO-A-2006/035421
- WO-A-2006/036363
- WO-A-2006/128215
- US-A1- 2003 004 827
- US-A1- 2005 097 320

## Description

### Technical Field of the Invention

The present invention relates to a code-generating device for enabling interaction with dynamic security between a user and a transaction service provider.

The invention also relates to a transaction server system and a secure transaction system comprising such a code-generating device and such a transaction server system.

The invention further relates to a method for interaction with dynamic security between a transaction service provider and a user having a code-generating device.

### Technical Background

Most currently deployed systems for secure on-line transactions, such as on-line banking, treat every transaction in the same way, irrespective of the risk associated with the transaction. When this traditional approach is used, a transaction service provider needs to make a trade-off between ease-of-use and risk. Through such a trade-off, the transaction service provider risks losing customers if too harsh security measures are implemented, or losing substantial amounts of money and customer trust if the security is too lenient.

US 2005/0097320 discloses a dynamic transaction method and system utilizing risk-based authentication as an alternative to the traditional, static transaction systems.

According to the method disclosed in US 2005/0097320, the level of authentication for a certain transaction is set depending on a risk assessment of the transaction and/or a party to the transaction. According to US 2005/0097320, the level of authentication can be raised by requiring a user to enter personal details and account details etc, and/or by sending a one time code to the user via an alternative communication route, such as by SMS.

However, since the dynamic security in this system is based on a set of data previously collected from the user, the flexibility of the system is limited by the amount of previously collected data. Furthermore, the previously collected data needs to be collected in a truly secure environment, which typically entails costly and intricate administration.

Moreover, the dynamic security according to US 2005/0097320 is implemented by transmitting question-and-answer-type authentication information over the internet, where there is always a risk of fraudsters intercepting the communication or obtaining authentication information by impersonating the transaction service provider (so-called "pharming").

WO 02/082387 discloses a system and method for effecting electronic transactions. The system includes a server for generating a challenge based on a transaction request. The challenge, as well as other information relating to the transaction is sent to a personal mobile device which includes a hardware secure module. The hardware secure module receives the information related to the transaction, prompts the user to approve the transaction and to enter a PIN, and calculates a response which is sent back to the server. Ther server verifies the response and approves or refuses the transaction based on the response.

### Summary of the Invention

In view of the above-mentioned and other drawbacks of the prior art, a general object of the present invention is to provide an improved transaction system with dynamic security.

According to a first aspect of the present invention, these and other objects are achieved through a code-generating device as defined by claim 1.

By "transaction service provider" should, in the context of the present application, be understood any entity which enables a registered user to perform any kind of transaction. Examples of transaction service providers include, for example, banks, authorities, stock-brokers etc. The transaction service provider is typically embodied as a transaction server system which is configured to interact with its users over a network.

Typical transactions include, for example, login, transfer of funds, payment, etc.

Consequently, a transaction-specific code should be understood as a code which is issued by the transaction service provider in connection with a request for a particular transaction.

The "information acquisition means" are means for acquiring information into the code-generating device, and may include one or several of a key pad, a camera, a bar code scanner, an interface for wired or wireless communication etc.

The present invention is based upon the realization that a high overall level of security in combination with ease-of-use in an online transaction system can be achieved by dynamically controlling the security level based on the estimated risk of transactions. The present inventor has, furthermore, realized that such a dynamic control of the security level can advantageously be achieved by determining, at the transaction service provider, a transaction-specific level of interaction between a user and his personal code-generating device. This "remote control" of the interaction between the user and his code-generating device is, according to the present invention, achieved by encoding, in the transaction-specific code provided by the transaction service provider, a sequence of predetermined functions to be performed by the code-generating device.

Each of these predetermined functions involves requesting the user to indicate a function-related value. One example of such a predetermined function may be to request the user to indicate a value, which may, for example, be related to the transaction or be related to the identity of the user, by providing the value via the information acquisition means. Another example of a predetermined function may be to request the user to acknowledge a message displayed to the user, whereby a value that represents this message is indicated by the user.

Function-related values may thus, for example, include values indicative of transaction-specific details, such as amount, destination account number etc; values indicative of user-specific details, such as the user's social security number, telephone number etc, and the user's PIN; values indicative of messages displayed to the user, which may relate to the type of requested transaction, such as international transfer, change of personal information etc.

Following the indication of the final function-related value, the response code is determined based on the sequence of function-related values indicated by the user.

Hereby, the response code can, depending on the security level required by the transaction service provider, indicate user presence, user awareness of the details of the transaction, time of transaction, user identity etc.

In case the risk of the transaction is believed to be low, the user may be required to only enter the transaction-specific code and his PIN into the code-generating device, whereafter the code-generating device generates a response code for signing the transaction. In this case, the transaction-specific sequence is formed by the single predetermined function of requesting entry of the user's PIN, and the transaction-specific response code is determined based on the transaction-specific code and the PIN indicated by the user.

In case of a medium level of risk, a predetermined message may be displayed to the user and the user may be prompted to confirm the content of the message, which may involve his intention to perform, for example, an international transfer of funds, by pressing "OK" on a key pad provided on the code-generating device, and then enter his PIN into the code-generating device, whereafter the code-generating device generates a response code based on a value indicative of the predetermined message and the user's PIN.

Finally, in case of a high risk transaction, the user may be required to actively enter, into the code-generating device, information such as destination account, currency, amount, and finally his PIN, before the code-generating device calculates a response code indicative of the sequence of function-related values indicated by the user.

Which sequence of functions should be performed by the code-generating device is, according to the present invention, determined by the transaction-specific code presented by the transaction service provider. It should here be noted that the user is not required to have any knowledge of - and is in fact typically unaware of - which sequence of predetermined functions that the transaction-specific code represents.

The user can thus perform the signing steps "off-line" in the secure environment of his own code-generating device. This reduces the risk for the user of performing, by mistake, a transaction that he was not intending to perform. Moreover, practically all types of so-called man-in-the-middle attacks are prevented.

Furthermore, values indicative of these signing steps are included in the resulting response code, whereby a very strong and secured act-of-will on behalf of the user can be communicated to the transaction service provider. This provides the transaction service provider with a strengthened non-repudiation for the transaction.

In summary, the ability of the code-generating device to recognize and react to a "security-level code" included in the transaction-specific code enables the transaction service provider, such as a bank, to implement the harshest security measures where these are warranted and prioritize user-convenience for transactions which are considered to involve a lower level of risk.

The transaction-specific code may advantageously comprise a first sub-code indicative of the transaction-specific sequence of predetermined functions and a second sub-code being a function of the first sub-code, and the processing circuitry may further be configured to evaluate the second sub-code to verify a correctness of the first sub-code.

Hereby, the code-generating device can be prevented from responding to an erroneous entry of the transaction-specific code by initiating a sequence of predetermined functions, which does not correspond to the requested transaction. This increases the user's trust in the code-generating device.

Moreover, the transaction-specific code may further include a challenge value which is indicative of the point in time of the transaction. For example, the challenge value can be indicative of the session involving the transaction.

The code-generating device according to the present invention may, furthermore, advantageously be configured to interact with a cryptographic module, and to utilize this cryptographic module to determine the above-mentioned transaction-specific response code.

The "cryptographic module" is a software or hardwarde module which is adapted to either encrypt, decrypt or determine a message authentication codes over data. The cryptographic module may implement any cryptographic algorithm, symmetric, assymetric or cryptographic hash functions. Examples of a symmetric cryptographic algorithm, for example, include a triple-DES MAC, and examples of an asymmetric cryptographic algorithm, for example, include the secret/public key pair approach often referred to as "public key infrastructure". An example of a cryptographic hash function is SHA-1.

The code-generating device may further comprise a connector for connecting the processing circuitry to a removably arranged electronic circuit comprising the cryptographic module.

In this embodiment, the cryptographic module associated with the user may preferably be provided in the form of a removable electronic circuit, such as the secure chip on a so-called smart card, the code-generating device having a connector configured to enable communication between the processing circuitry comprised in the code-generating device and the removable electronic circuit.

Alternatively, the code-generating device may comprise a wireless interface for enabling wireless communication with an external cryptographic module.

According to a further alternative, the cryptographic module may be comprised in the processing circuitry.

In any case, the cryptographic module contains a representation of a user-specific secret cryptographic key which can be utilized to decrypt encrypted messages received from the transaction service provider.

In order to enable such a transfer of encrypted information, the user and the transaction service provider should, at the time of the transaction, have an established relation. In particular, both parties should preferably have access to a cryptographic key related to the other, such as a shared secret key in a symmetric cryptographic system, or the public key of the other party in the asymmetric public key infrastructure situation.

The code-generating device may, furthermore, be configured to decrypt encrypted transaction information comprised in the transaction-specific code, and display the decrypted transaction information to the user by means of a display unit comprised in the code-generating device.

Hereby, it can be verified to the user, in the secure and trusted environment of his own code-generating device interacting with his personal cryptographic module, that the transaction service provider is genuine and/or that the transaction to be performed is, in fact, the one that was requested.

According to one embodiment, the information acquisition means comprised in the code-generating device may include an image acquisition unit, and the processing circuitry comprised in the code-generating device may further be configured to acquire, through the image acquisition unit, an image provided by the transaction service provider. This image may, furthermore, encode the above mentioned transaction-specific code.

The "image acquisition unit" may be any unit capable of acquiring image information, such as, for example, a camera module (including an imaging chip and possibly an optical element, such as a lens), or a simple scanner, such as a barcode reader.

The image, which encodes the transaction-specific code may be displayed on a display device or be printed on a transaction document, such as a money transfer order.

Using the code-generating device according to this embodiment, the user can easily and effortlessly transfer information, which may or may not be encrypted, from the transaction service provider to the code-generating device. This enables the user to verify and review the information in the secure environment of his own code-generation device.

By acquiring a transaction-specific code, such as a challenge code in connection with a transaction, as an image, it will not be perceived as taxing or tedious to a user to sign the transaction.

Furthermore, the risk of incorrect input is practically removed.

Consequently, the present invention enables the transaction service provider to maintain a high security level (for example through an extended length of the transaction-specific code) in a user-friendly manner.

Additionally, the risk of so-called shoulder surfing (a person other than the user gaining access to the transaction information by "looking over the shoulder" of the user) is practically eliminated, since only the user is typically able to have the image decoded and, depending on application, decrypted.

According to a second aspect of the present invention, the above-mentioned and other objects are achieved through a transaction server system as defined by claim 13.

The user data may , for example, include user ID, a seed (often referred to as a "card diversification seed") for enabling creation of a user-specific cryptographic key and account details for the user.

Effects and features of this second aspect of the present invention are largely analogous to those described above in connection with the first embodiment.

The code-generating device and the transaction server system according to the present invention may, furthermore, be included in a secure transaction system, further comprising a user communication device which is in connection with the transaction server system.

The user communication device may be configured to display an image to the user, and to receive transaction-related input from the user.

According to one embodiment, the user communication device may be a personal computer.

This is typically the case for online banking systems, where the user handles his accounts and performs transactions, such as paying bills, over the internet.

According to another embodiment, the user communication device may be a mobile phone or a personal digital assistant.

According to yet another embodiment, the user communication device may be an automated teller machine (ATM).

According to a third aspect of the present invention, the above-mentioned and other objects are achieved through a method as defined by claim 20.

Effects and features of this third aspect of the present invention are largely analogous to those described above in connection with the first embodiment.

Additionally, the above-mentioned and other objects are achieved through a computer program module configured to perform the steps of the method according to present invention when run on processing circuitry comprised in a code-generating device according to the invention.

### Brief Description of the Drawings

These and other aspects of the present invention will now be described in more detail, with reference to the appended drawings showing a currently preferred embodiment of the invention, wherein:
Fig 1 schematically illustrates a secure transaction system according to the present invention;
Fig 2 is a schematic illustration of the information exchange between a user and a transaction service provider and between the user and a code-generating device according to the present invention when performing a transaction;
Fig 3 is a flow-chart schematically illustrating a transaction authorization method performed by the transaction server system in fig 1;
Fig 4 is a flow-chart schematically illustrating an embodiment of the method according to the present invention and its relation to the transaction authorization method in fig 3;
Fig 5 is a schematic plane view of a code-generating device according to an embodiment of the present invention as seen from the front and from the side;
Fig 6 is a schematic block diagram of the code-generating device in fig 5;
Fig 7 is a schematic illustration of an examplary display image for display to a user having a code-generating device with an image acquisition unit;
Fig 8 is a flow-chart schematically illustrating an embodiment of the method carried out in response to the display image in fig 7; and
Fig 9 is a flow-chart schematically illustrating an embodiment of the method according to the present invention carried out in response to the display image in fig 7.

### Detailed Description of a Preferred Embodiment of the Invention

In the following description, the present invention is described with reference to a secure transaction system in which each user is in secure connection with a transaction server system through an internet-connected personal computer. Furthermore, the code-generating device is provided with a display and a key pad.

It should be noted that this by no means limits the scope of the present invention, which is equally applicable to secure transaction systems in which the users are connected to the transaction service provider through other kinds of user communication devices, such as mobile phones or automated teller machines (ATMs), or in which different users are utilizing different kinds of user communication devices.

Additionally, the code-generating device may have any other kind of user input means other than a keypad, such as a touch display, a so-called click wheel etc.

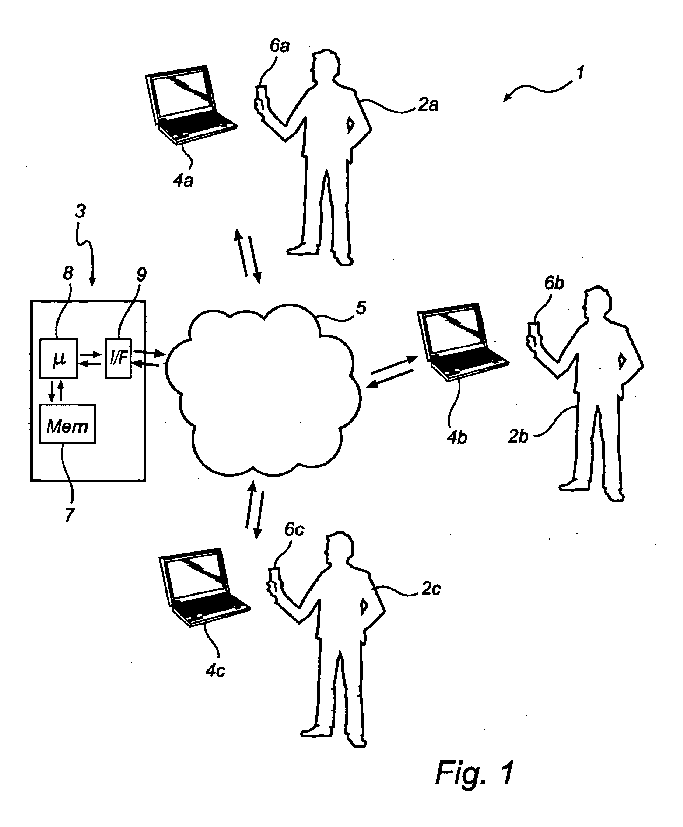

Fig 1 schematically illustrates a secure transaction system 1, in which each of a plurality of users 2a-c communicates with a transaction service provider, here embodied by a transaction server system 3, through their respective personal computers 4a-c which are securely connected to the transaction server system 3 over a network 5, such as the internet. Each user 2a-c has his personal code-generating device 6a-c.

The transaction server system 3 includes a database 7 for storing user data, such as, for each user, a user ID, a seed for creation of a user-specific cryptographic key and account details. The database 7, which is here illustrated as a computer memory in a transaction server, may be provided internally to the transaction server or may reside in a (possibly remotely located) separate device which may be configured to communicate data stored in the database with one or several transaction servers. The transaction server system 3, additionally, includes processing circuitry 8, which is configured to communicate with the database 7, and a network interface 9, through which the transaction server system 3 communicates with the user communication devices 4a-c over the network 5. The processing circuitry 8 further comprises a cryptographic module, which is, in this context, often referred to as a Host Security Module (HSM).

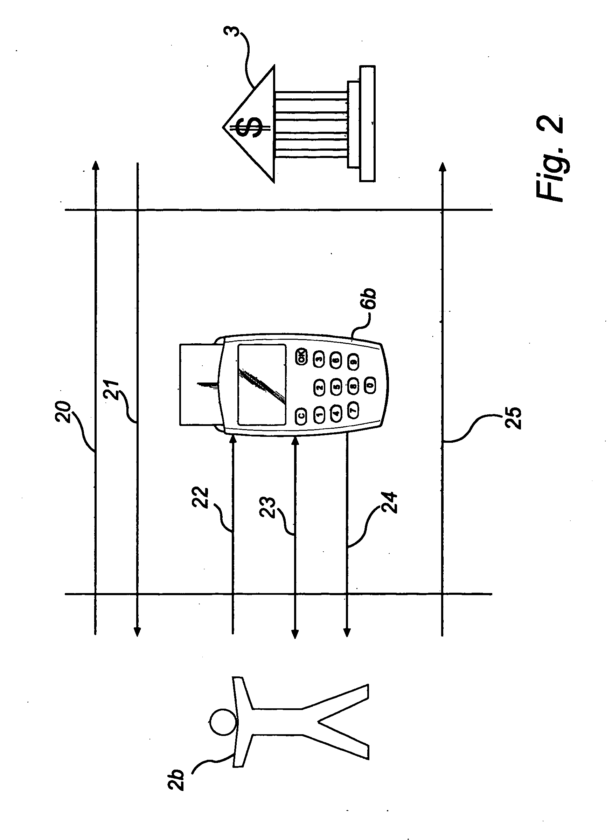

The information exchange, occurring during a transaction, between a user, say user 2b in fig 1, and the transaction service provider 3, and between the user 2b and his code-generating device 6b will now be described with reference to fig 2.

In fig 2, events involving flow of information between the parties 2b, 3, 6b is illustrated by arrows, where events occur sequentially from top to bottom in fig 2.

The first event in the exemplary transaction is a transaction request transmitted from the user 2b (via his user-communication device 4b) to the transaction service provider 3. This event is represented by the top arrow 20 extending from left to right in fig 2.

In response to the transaction request 20, the transaction service provider transmits, as indicated by the arrow 21 extending from right to left, a transaction-specific code to the user 2b. This transaction-specific code is provided to the code-generating device 6b associated with the user 2b, as indicated by the arrow 22. The code-generating device subsequently performs a sequence of predetermined functions determined by the transaction-specific code. Each function involves prompting the user 2b to indicate a function-related value into the code-generating device 6b. This two-way exchange between the user 2b and his code-generating device 6b is represented by the arrow 23 in fig 2.

Following the final input in the sequence of function-related values, the code-generating device 6b provides a response code to the user 2b. This is indicated by the next arrow 24 in fig 2.

This response code is then transmitted by the user 2b, via his user-communication device 4b to the transaction service provider 3, as indicated by the final arrow 25 in fig 2.

As is illustrated in fig 2, an "unconnected", or "off-line", signing procedure is carried out, in which the user 2b interacts with his code-generating device 6b. This unconnected signing procedure is determined by the transaction service provider 3 through the transaction-specific code transmitted from the transaction service provider 3 to the user 2b (arrow 21).

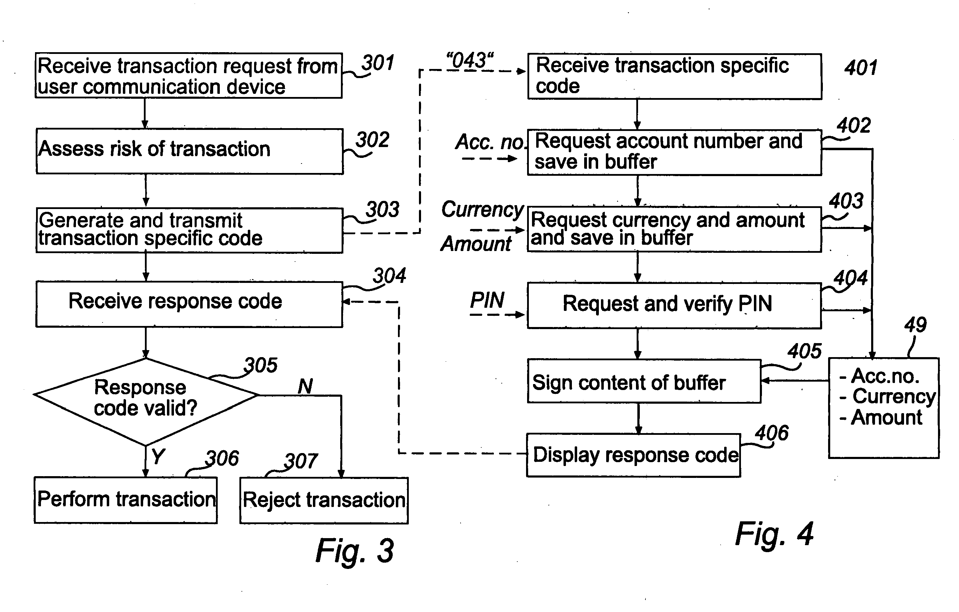

The transaction procedure, and in particular the unconnected signing procedure schematically illustrated in fig 2 will now be elucidated further with reference to the flow-charts in figs 3 and 4.

The flow-chart in fig 3 schematically illustrates the procedure carried out by the transaction server system according to an embodiment of the present invention, while the flow-chart in fig 4 schematically illustrates the procedure carried out by the code-generating device according to an embodiment of the present invention, in case of a "high risk" transaction.

Referring first to fig 3, the transaction request is received from the user-communication device (for example 4b in fig 1) in a first step 301. In the subsequent step 302, the transaction server system performs a risk assessment based on the transaction request. The risk assessment may be based on factors such as the kind of transaction requested, the status of the user requesting the transaction, the origin of the transaction (for example IP-number), the destination of the transaction (if the transaction involves transfer of funds), the history of similar transactions, etc, or a combination of such factors.

Based on the result of the risk assessment performed in step 302, the transaction server system 3 generates a transaction-specific code and transmits this transaction-specific code to the user-communication device 4b in the following step 303. The transaction-specific code includes a code indicative of a sequence of predetermined functions to be performed by the code-generating device 6b associated with the user 2b, from whom the transaction request originated.

Examples of such codes and associated predetermined functions are provided below in table 1. It should be noted that these codes and functions are provided for exemplifying purposes only, and should by no means be construed as limiting the scope of the present invention.

**Table 1:**

| **Code** | **Function name** | **Description** |
|---|---|---|
| '2' | Challenge | Request for user entry of a "challenge" of 0-8 digits. (Challenge or hash of transaction data.) |
| '3' | Currency and Amount | Request for user entry of a currency and an amount of 1-12 digits. |
| '4' | Destination Account | Request for user entry of a beneficiary account 1-36 digits |
| '5' | Bank Code Number | Request for user entry of a bank code, 1-<n> digits |
| '6' | Number of Items | Request for user entry of a numerical value. For example used to signify number of units, such as stocks, in a transactions. A numerical value, 1-6 digits. |
| '7' | Invoice ID/Reference | Request for user entry of "reference" number, 0-36 digits |
| '10' | Payment Alert | Display: "Payment, OK?" |
| '11' | National Transfers Alert | Display: "National Transfer, OK?" |
| '12' | Recurring Payment Alert | Display: "Recurring payment, OK?" |
| '13' | International Transfers Alert | Display: "International Transfer, OK?" |
| '14' | Change of Personal Setting | Display: "Address Change, OK?" |

Assume now that the risk assessment performed in step 302 indicated that the requested transaction is a high risk transaction of such a kind that the transaction service provider 3 would require the user to actively confirm the destination account, and the currency and amount to be transferred to that account.

Referring to the exemplary functions and their associated codes provided in table 1, the user 2b would then be instructed by the transaction service provider 3, to enter the transaction-specific code '043' in his code-generating device 6b. The first digit in the code, the '0', here indicates that the dynamic security functionality of the code-generating device 6b should be invoked. The second and third digits '43' indicate that the predetermined functions '4' (Destination Account) and '3' (Currency and Amount) should be performed in sequence by the code-generating device 6b.

Temporarily leaving fig 3 at this stage, the procedure carried out by the code-generating device 6b in response to the entry of the transaction-specific code '043' will now be described in detail with reference to fig 4.

As shown in fig 4, the code-generating device 6b receives the transaction-specific code '043' in a first step 401. The code-generating device 6b then evaluates the code sequentially, digit by digit, and first enters the "dynamic" mode as encoded by the first digit '0'. The code-generating device 6b then moves on to decoding the remainder of the transaction-specific code, and, in step 402, performs the first function ('4') of requesting user entry of the destination account number. Following input by the user 2b of the destination account number, this value is stored at a predetermined location in a signing buffer 49. Subsequently, in step 403, the second function ('3') of requesting the user 2b to enter the currency and amount to be transferred is performed. The values indicative of currency and amount which are entered into the code-generating device 6b by the user 2b are stored in corresponding predetermined locations in the signing buffer 49.

In the next step 404, the code-generating device 6b requests the user to enter his PIN to demonstrate user presence and verifies the PIN.

When the entire sequence of functions requested by the transaction service provider 3 has been performed, and the corresponding sequence of user-entered values has been stored in the signing buffer 49, the content of the signing buffer 49 is signed by the code-generating device 6b in the following step 405. This signing typically takes place utilizing a cryptographic module, which may, for example, be provided in the code-generating device 6b itself or on a smart card with which the code-generating device 6b is configured to interact.

Finally, in step 406, the response code is displayed to the user 2b, who can then transmit the response code to the transaction server system via his user-communication device 4b.

Having now concluded the procedure carried out in the code-generating device, corresponding to the arrows 22, 23 and 24 in fig 2, the remaining steps carried out by the transaction server system 3 will now be described with continued reference to fig 3.

As indicated in fig 3, the transaction server system 3 receives the response code, generated by the code-generating device 6b, in step 304.

In the subsequent step 305, the response code is evaluated.

If the evaluation performed in step 305 indicates that the response code is a valid response to the transaction-specific code, the transaction is performed in step 306, and, if the response code is invalid, the transaction is rejected in step 307.

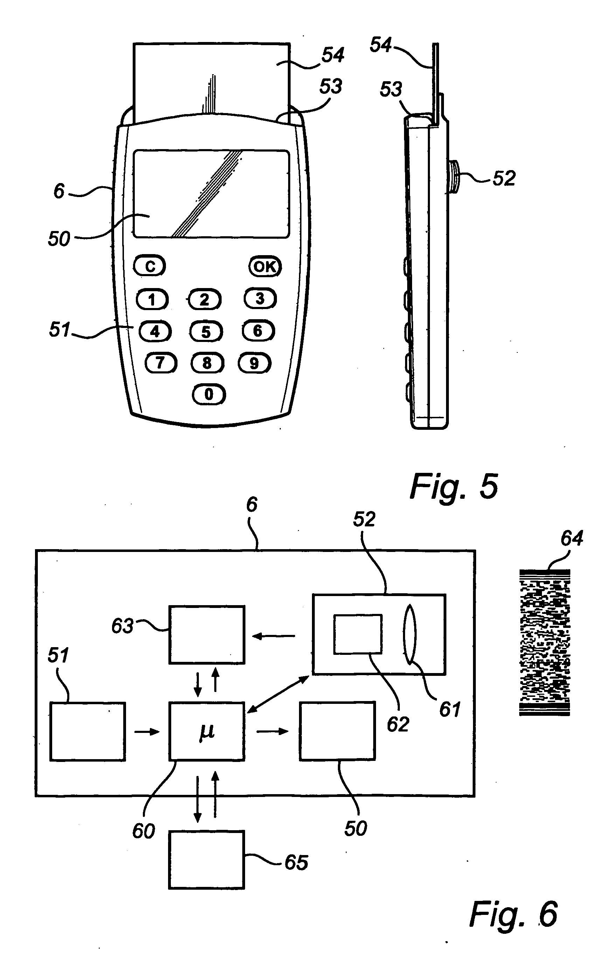

An embodiment of the code-generating device 6a-c including an image acquisition unit will now be described in greater detail with reference to figs 5 and 6.

Fig 5 shows a plane view of an embodiment of the code-generating device according to the present invention from the front and from the side, where the code-generating device 6a-c is equipped with a display 50, a key pad 51, a camera 52 and a slot 53 for receiving a removable cryptographic module in the form of a smart card 54.

Fig 6 is a block diagram schematically illustrating the functional configuration of the code-generating device 6a-c in fig 5, where a microprocessor 60 is connected to the keypad 51, the display 50, and a camera module 52 comprising a lens 61 and a solid state image sensor 62, such as a CMOS sensor or a CCD sensor. Both the camera module 52 and the microprocessor 60 are connected to a 2D barcode decoder 63 in order to enable rapid decoding of data encoded in the 2D barcode 64 acquired through the camera module 52.

When the smart card 54 is inserted in the slot 53 (see fig 5), the microprocessor is also connected to the cryptographic module 65 comprised in the secure chip on the smart card 54.

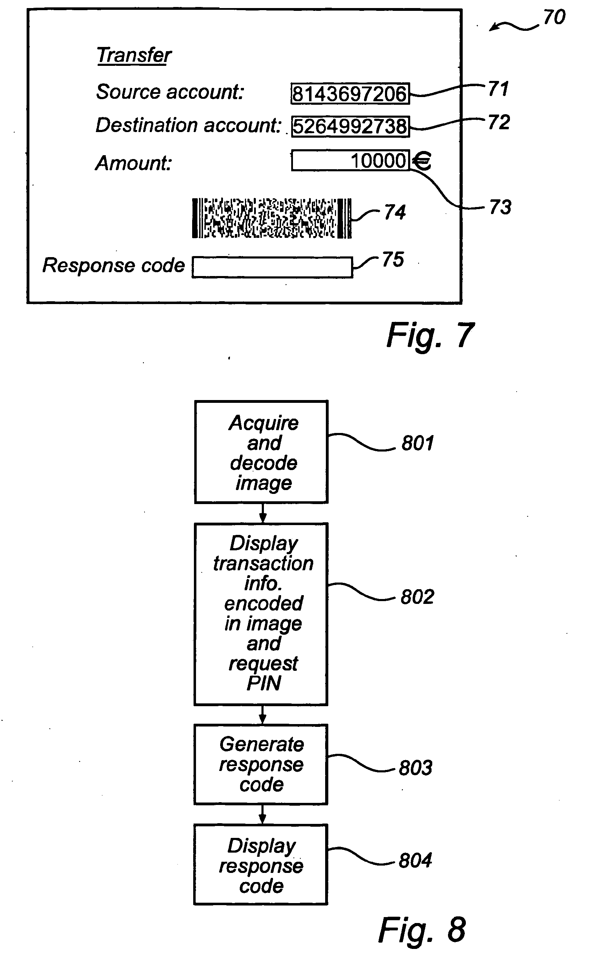

In the following, various embodiments of the method according to the present invention will be described with reference to figs 7 to 9.

Fig 7 schematically illustrates an example of a display image 70 presented to the user 2b following a user request for a money transfer between accounts in the secure transaction system 1 in fig 1.

As shown in fig 7, the user 2b has entered a source account number 8143697206, a destination account number 5264992738, and an amount to be transferred 10 000 € in the appropriate boxes 71-73. The screen image 70 also includes a 2D barcode 74 generated by the transaction server system 3 based upon the transaction details entered in the input boxes 71-73, and a text box 75 for entry of a response code, whereby the user 2b signs for the requested transfer of funds.

An embodiment of the method, carried out in response to the display image in fig 7, will now be described with reference to fig 8.

As illustrated in fig 8, an image is acquired and decoded in a first step 801. The image, in this case, the 2D barcode 74 is acquired using the camera module 52 of the code-generating device 6b. The image acquisition is controlled by the microcontroller 60 and is typically initiated by an action from the user 2b, such as an actuation of one of the keys on the key pad 51 or by means of a user input device (not shown) which is dedicated to operation of the camera module 52.

The decoding of the 2D barcode 74 may be performed by the microprocessor 60, by the camera module 52, or by a dedicated decoder 63.

The 2D barcode 73 encodes a transaction-specific code, which, in the present example, includes encrypted transaction information. Following acquisition and decoding (step 801) of the image, the encrypted transaction-specific code is decrypted using the user's 2b cryptographic module 65, and the decrypted transaction information is displayed to the user 2b by means of the display 50 of the code-generating device 6b, in step 802. Hereby, the user 2b can, in the secure environment of his code-generating device 6b in cooperation with his personal cryptographic module carried by the smart card 54, verify that the transaction details (the source account, the destination account, and the amount to be transferred) are correct. When displaying the transaction information, the code-generating device 6b also requests the user 2b to input a PIN to acknowledge his acceptance of the displayed information.

After having received and verified the PIN provided by the user 2b, a response code is generated in step 803.

The response code preferably includes information indicative of transaction details, user ID, and that the user 2b has reviewed and acknowledged the transaction details in the the code-generating device 6b.

The generated response code is, in step 804, displayed to the user 2b through the display 50, whereby the user 2b is enabled to enter the response code in the appropriate text box 75.

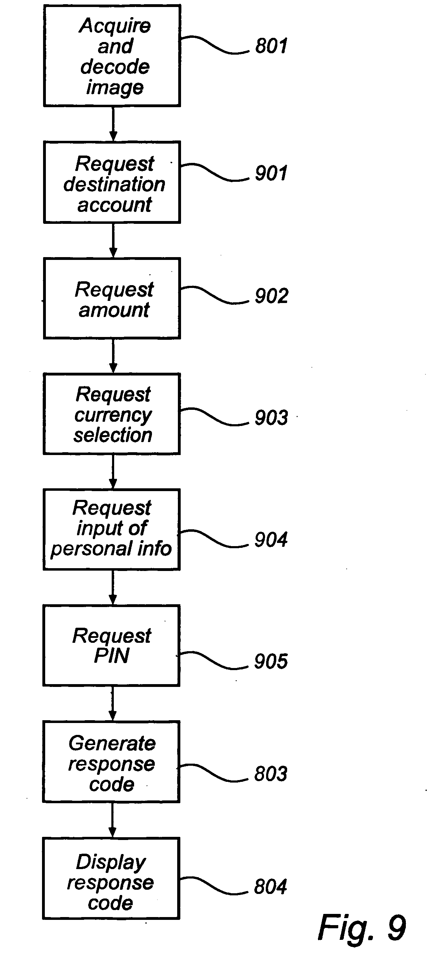

An embodiment of the method according to the invention, carried out in response to the display image in fig 7, will now be described with reference to fig 9.

The method described with reference to fig 9 differs from that according to fig 8 in that the transaction-specific code encoded by the displayed 2D barcode 74 includes a code indicative of a sequence of functions to be performed by the code-generating device 6b before a response code can be generated.

Following acquisition and decoding (step 801) of the image as previously described, the code encoded by the 2D barcode 74 is evaluated by the code-generating device 6b to determine which sequence of functions is required by the transaction service provider for this particular transaction.

The flow-chart in fig 9 illustrates a case when the risk of the transaction is considered as high, and the transaction service provider therefore transmits an image 74 to the user communication device 4b encoding a transaction-specific code including a code indicative of an sequence of predetermined functions offering a high level of security and non-repudiation for the transaction.

In the present example, the user 2b is, in step 901, requested to enter the destination account for the money transfer. Thereafter, in step 902, the user 2b is requested to enter the amount to transfer, and, in step 903, he is requested to select one of a list of currencies, for example, by entering a number indicating one in a list of displayed currencies.

By entering the destination account, the amount and the currency for the requested transfer, the user 2b has actively expressed an act of will to perform the transfer. In order to ensure that the correct user 2b is in possession of the code-generating device 6b and is answering the questions posed, additional personal information, such as the user's phone number, birth date, social security number etc. is requested in step 904.

Following the entries in steps 901 to 904 of transaction-specific and user-specific information, the user is, in step 905, requested to finally authenticate the information previously entered in the code-generating device 6b through the entry of his PIN.

Thereafter, the response code is generated as described above in connection with fig 8, based upon the sequence of user-entered values input by the user 2b during the above-described authentication sequence.

Finally the response code is displayed to the user in step 804, such that the user 2b can enter the response code in the appropriate text box 75 to thereby authorize the transaction.

Included in the response code, the transaction service provider will, at a high level of security, be able to verify what has been signed, by whom it has been signed, and a very strong indication of act-of-will on behalf of the user 2b.

The person skilled in the art realizes that the present invention as defined in the claims by no means is limited to the preferred embodiments described above. For example, the response code generated in the code-generating device need not be displayed to the user, but may be provided directly from the code-generating device to the user communication device or to the transaction server system. Furthermore, the coding of each function, and the indication of a function-related value requested by user will be dependent on the particular implementation and on who will be using this technology, banks, stockbrokers, etc. Moreover, it should be understood that either a user-entered value, such as a PIN, or a representation or indication thereof may be used for determination of the transaction-specific response code.

## Claims

1. A code-generating device (6a-c) for enabling a transaction between a user (2a-c) and a transaction service provider (3) with dynamic control of a security level of the transaction based upon an estimated risk thereof, said code-generating device (6a-c) having:
information acquisition means (51, 52); and
processing circuitry (60) configured to:
receive, via said information acquisition means (51, 52), a transaction-specific code generated by said transaction service provider (3) in connection with a request for said transaction, said transaction-specific code encoding a transaction-specific sequence of predetermined functions;
evaluate said transaction-specific code;
perform, based on said evaluation of the transaction-specific code, said transaction-specific sequence of predetermined functions, each involving prompting said user (2a-c) to indicate a respective function-related value, resulting in a sequence of function-related values indicated by the user; and
determine a transaction-specific response code based on said sequence of function-related values, thereby enabling secure authentication of said transaction.

2. A code-generating device (6a-c) according to claim 1, wherein:
said transaction-specific code comprises a first sub-code indicative of said transaction-specific sequence of predetermined functions and a second sub-code being a function of said first sub-code; and
said processing circuitry (60) is further configured to evaluate said second sub-code to thereby verify a correctness of said first sub-code.

3. A code-generating device (6a-c) according to claim 1 or 2, wherein said processing circuitry (60) is further configured to interact with a cryptographic module (65), and to utilize said cryptographic module (65) to determine said transaction-specific response code.

4. A code-generating device (6a-c) according to any one of the preceding claims, wherein said sequence of function-related values includes a PIN of said user.

5. A code-generating device (6a-c) according to any one of the preceding claims, wherein said sequence of function-related values includes a value indicative of user approval of a predetermined message.

6. A code-generating device (6a-c) according to any one of the preceding claims, wherein said sequence of function-related values further includes at least one transaction-related value entered into said code-generating device (6a-c) by the user (2a-c).

7. A code-generating device (6a-c) according to claim 1 or 2, wherein said information acquisition means comprise user input means (51, 52); and
said processing circuitry (60) is configured to interact with a cryptographic module (65),
wherein said processing circuitry (60) is further adapted to:
receive, via said user input means (51, 52), a transaction-specific code generated by said transaction service provider (3);
evaluate said transaction-specific code;
perform, based on said evaluation of the transaction-specific code, a transaction-specific sequence of predetermined functions including:
requesting said user to indicate at least one function-related value via said user input means (51, 52); and
requesting said user to input a PIN; and
determine, utilizing said cryptographic module (65), a transaction-specific response code based on said function-related value and said PIN.

8. A code-generating device (6a-c) according to any one of the preceding claims, wherein:
said information acquisition means includes an image acquisition unit (52); and
said processing circuitry (60) is further configured to acquire, through said image acquisition unit (52), an image (74) provided by said transaction service provider (3), said image (74) encoding said transaction-specific code.

9. A code-generating device (6a-c) according to claim 8, wherein said image includes a barcode (74).

10. A code-generating device (6a-c) according to any one of the preceding claims, further configured to:
decrypt encrypted transaction information comprised in said transaction-specific code; and
display said decrypted transaction information to said user by means of a display unit (50) comprised in said code-generating device (6a-c).

11. A code-generating device (6a-c) according to claim 7, further comprising a connector for connecting said processing circuitry (60) to a removably arranged electronic circuit comprising said cryptographic module (65).

12. A code-generating device (6a-c) according to claim 7, wherein said cryptographic module (65) is comprised in said processing circuitry (60).

13. A transaction server system (3) comprising:
a database (7) for storing user data;
a network interface (9) for enabling communication with a plurality of user communication devices (4a-c) over a network (5); and
processing circuitry (8) for performing transaction operations, wherein said processing circuitry (8) is adapted to:
perform a risk assessment for a requested transaction;
determine a transaction-specific code based on said risk assessment, said transaction-specific code comprising a code indicative of a sequence of predetermined functions to be performed by a code-generating device associated with a user having requested said transaction;
transmit, to one of said user-communication devices (4a-c) from which said transaction request originated, said transaction-specific code, thereby enabling display of said code to the user (2a-c) having requested the transaction;
receive a transaction-specific response code generated by said code-generating device (6a-c) and based on a sequence of function-related values indicated by the user;
evaluate said response code; and
if said response code is valid, carry out the requested transaction.

14. A transaction server system (3) according to claim 13, wherein said processing circuitry (8) is configured to encode said transaction-specific code as an image for display by said user communication device (4a-c).

15. A transaction server system (3) according to claim 14, wherein said image data corresponds to a barcode.

16. A secure transaction system (1) comprising:
a code-generating device (6a-c) according to any one of claims 1 to 12;
a transaction server system (3) according to any one of claims 13 to 15; and
a user communication device (4a-c) which is in connection with said transaction server system (3) and configured to display data to the user (2a-c), and to receive transaction-related input from said user.

17. A secure transaction system (1) according to claim 16, wherein said user communication device (4a-c) is a personal computer.

18. A secure transaction system (1) according to claim 16, wherein said user communication device (4a-c) is a mobile phone.

19. A secure transaction system (1) according to claim 16, wherein said user communication device (4a-c) is an automated teller machine.

20. A method, for enabling secure interaction between a transaction service provider (3) and a user (2a-c) having a code-generating device (6a-c), said code-generating device including:
information acquisition means (51, 52); and
processing circuitry (60),
said method comprising the steps of:
receiving (401), via said information acquisition means (51, 52), a transaction-specific code generated by said transaction service provider (3), said transaction-specific code encoding a transaction-specific sequence of predetermined functions;
evaluating said transaction-specific code;
performing (402-404), based on said evaluation of the transaction-specific code, said transaction-specific sequence of predetermined functions, each involving prompting said user (2a-c) to indicate a respective function-related value, resulting in a sequence of function-related values indicated by the user; and
determining a response code based on said sequence of function-related values, thereby enabling secure authentication of said transaction.

21. A computer program module configured to perform the steps of the method according to claim 20 when run on processing circuitry (60) comprised in a code-generating device (6a-c) according to any one of claims 1 to 12.

## Patentansprüche

1. Code erzeugende Vorrichtung (6a-c) zum Ermöglichen einer Transaktion zwischen einem Nutzer (2a-c) und einem Transaktions-Serviceprovider (3) mit dynamischer Steuerung einer Sicherheitsstufe der Transaktion auf der Basis eines geschätzten Risikos der Transaktion, wobei die Code erzeugende Vorrichtung (6a-c) Folgendes aufweist:
ein Informationserfassungsmittel (51, 52); und
eine Verarbeitungsschaltung (60), die dafür konfiguriert ist:
über das Informationserfassungsmittel (51, 52) einen transaktionsspezifischen Code zu empfangen, der durch den Transaktions-Serviceprovider (3) in Verbindung mit einer Anfrage nach der Transaktion erzeugt wird, wobei der transaktionsspezifische Code eine transaktionsspezifische Sequenz vorgegebener Funktionen codiert;
den transaktionsspezifischen Code auszuwerten;
auf der Basis der Auswertung des transaktionsspezifischen Codes die transaktionsspezifische Sequenz vorgegebener Funktionen auszuführen, die jeweils beinhalten, den Nutzer (2a-c) aufzufordern, einen jeweiligen funktionsbezogenen Wert anzugeben, was eine Sequenz funktionsbezogener, durch den Nutzer angegeben Werte zur Folge hat; und
auf der Basis der Sequenz funktionsbezogener Werte einen transaktionsspezifischen Antwortcode zu bestimmen, wodurch eine sichere Authentifizierung der Transaktion ermöglicht wird.

2. Code erzeugende Vorrichtung (6a-c) nach Anspruch 1, wobei:
der transaktionsspezifische Code einen ersten Subcode, der für die transaktionsspezifische Sequenz vorgegebener Funktionen steht, und einen zweiten Subcode, der eine Funktion des ersten Subcodes ist, umfasst; und
die Verarbeitungsschaltung (60) des Weiteren dafür konfiguriert ist, den zweiten Subcode auszuwerten, um **dadurch** eine Richtigkeit des ersten Subcodes zu verifizieren.

3. Code erzeugende Vorrichtung (6a-c) nach Anspruch 1 oder 2, wobei die Verarbeitungsschaltung (60) des Weiteren dafür konfiguriert ist, mit einem kryptografischen Modul (65) zusammenzuwirken und das kryptografische Modul (65) dafür zu nutzen, den transaktionsspezifischen Antwortcode zu bestimmen.

4. Code erzeugende Vorrichtung (6a-c) nach einem der vorangehenden Ansprüche, wobei die Sequenz funktionsbezogener Werte eine PIN des Nutzers enthält.

5. Code erzeugende Vorrichtung (6a-c) nach einem der vorangehenden Ansprüche, wobei die Sequenz funktionsbezogener Werte einen Wert enthält, der die Nutzerlaubnis zu einer vorgegebenen Meldung anzeigt.

6. Code erzeugende Vorrichtung (6a-c) nach einem der vorangehenden Ansprüche, wobei die Sequenz funktionsbezogener Werte des Weiteren mindestens einen transaktionsbezogenen Wert enthält, der durch den Nutzer (2a-c) in die Code erzeugende Vorrichtung (6a-c) eingegeben wird.

7. Code erzeugende Vorrichtung (6a-c) nach Anspruch 1 oder 2, wobei das Informationserfassungsmittel ein Nutzereingabemittel (51, 52) umfasst; und
die Verarbeitungsschaltung (60) dafür konfiguriert ist, mit einem kryptografischen Modul (65) zusammenzuwirken,
wobei die Verarbeitungsschaltung (60) des Weiteren dafür geeignet ist:
über das Nutzereingabemittel (51, 52) einen transaktionsspezifischen Code zu empfangen, der durch den Transaktions-Serviceprovider (3) erzeugt wurde;
den transaktionsspezifischen Code auszuwerten;
auf der Basis der Auswertung des transaktionsspezifischen Codes eine transaktionsspezifische Sequenz vorgegebener Funktionen auszuführen, die Folgendes enthält:
Auffordern des Nutzers, mindestens einen funktionsbezogenen Wert über das Nutzereingabemittel (51, 52) anzugeben; und
Auffordern des Nutzers, eine PIN einzugeben; und
Bestimmen - unter Nutzung des kryptografischen Moduls (65) - eines transaktionsspezifischen Antwortcodes auf der Basis des funktionsbezogenen Wertes und der PIN.

8. Code erzeugende Vorrichtung (6a-c) nach einem der vorangehenden Ansprüche, wobei:
das Informationserfassungsmittel eine Bildaufnahmeeinheit (52) enthält; und
die Verarbeitungsschaltung (60) des Weiteren dafür konfiguriert ist, mittels der Bildaufnahmeeinheit (52) ein durch den Transaktions-Serviceprovider (3) bereitgestelltes Bild (74) aufzunehmen, wobei das Bild (74) den transaktionsspezifischen Code codiert.

9. Code erzeugende Vorrichtung (6a-c) nach Anspruch 8, wobei das Bild einen Strichcode (74) enthält.

10. Code erzeugende Vorrichtung (6a-c) nach einem der vorangehenden Ansprüche, die des Weiteren dafür konfiguriert ist:
verschlüsselte Transaktionsinformationen zu entschlüsseln, die in dem transaktionsspezifischen Code enthalten sind; und
dem Nutzer die entschlüsselten Transaktionsinformationen mittels einer Anzeigeeinheit (50), die in der Code erzeugenden Vorrichtung (6a-c) enthalten ist, anzuzeigen.

11. Code erzeugende Vorrichtung (6a-c) nach Anspruch 7, die des Weiteren einen Verbinder umfasst, um die Verarbeitungsschaltung (60) mit einem herausnehmbar angeordneten elektronischen Schaltkreis zu verbinden, der in dem kryptografischen Modul (65) enthalten ist.

12. Code erzeugende Vorrichtung (6a-c) nach Anspruch 7, wobei das kryptografische Modul (65) in der Verarbeitungsschaltung (60) enthalten ist.

13. Transaktionsserversystem (3), das Folgendes umfasst:
eine Datenbank (7) zum Speichern von Nutzerdaten;
eine Netzwerkschnittstelle (9) zum Ermöglichen einer Kommunikation mit mehreren Nutzerkommunikationsvorrichtungen (4a-c) über ein Netzwerk (5); und
eine Verarbeitungsschaltung (8) zum Ausführen von Transaktionsoperationen, wobei die Verarbeitungsschaltung (8) dafür geeignet ist:
eine Risikoeinschätzung für eine angeforderte Transaktion auszuführen;
einen transaktionsspezifischen Code auf der Basis der Risikoeinschätzung zu bestimmen, wobei der transaktionsspezifische Code einen Code umfasst, der für eine Sequenz vorgegebener Funktionen steht, die durch eine Code erzeugende Vorrichtung auszuführen sind, die einem Nutzer zugeordnet ist, der die Transaktion angefordert hat;
an eine der Nutzer-Kommunikationsvorrichtungen (4a-c), von der die Transaktionsanfrage ausging, den transaktionsspezifischen Code zu senden, wodurch es möglich wird, dem Nutzer (2a-c), der die Transaktion angefordert hat, den Code anzuzeigen;
eine transaktionsspezifische Antwort zu empfangen, die durch die Code erzeugende Vorrichtung (6a-c) erzeugt wurde, und sich auf einer Sequenz funktionsbezogener Werte, die durch den Nutzer angegeben wurden gründet:
den Antwortcode auszuwerten; und
wenn der Antwortcode gültig ist, die angeforderte Transaktion auszuführen.

14. Transaktionsserversystem (3) nach Anspruch 13, wobei die Verarbeitungsschaltung (8) dafür konfiguriert ist, den transaktionsspezifischen Code als ein Bild zu codieren, der durch die Nutzerkommunikationsvorrichtung (4a-c) angezeigt wird.

15. Transaktionsserversystem (3) nach Anspruch 14, wobei die Bilddaten einem Strichcode entsprechen.

16. Sicheres Transaktionssystem (1), das Folgendes umfasst:
eine Code erzeugende Vorrichtung (6a-c) nach einem der Ansprüche 1 bis 12;
ein Transaktionsserversystem (3) nach einem der Ansprüche 13 bis 15; und
eine Nutzerkommunikationsvorrichtung (4a-c), die mit dem Transaktionsserversystem (3) verbunden ist und dafür konfiguriert ist, dem Nutzer (2a-c) Daten anzuzeigen, und transaktionsbezogene Eingaben des Nutzers zu empfangen.

17. Sicheres Transaktionssystem (1) nach Anspruch 16, wobei die Nutzerkommunikationsvorrichtung (4a-c) ein Personalcomputer ist.

18. Sicheres Transaktionssystem (1) nach Anspruch 16, wobei die Nutzerkommunikationsvorrichtung (4a-c) ein Mobiltelefon ist.

19. Sicheres Transaktionssystem (1) nach Anspruch 16, wobei die Nutzerkommunikationsvorrichtung (4a-c) ein Geldautomat ist.

20. Verfahren zum Ermöglichen einer sicheren Interaktion zwischen einem Transaktions-Serviceprovider (3) und einem Nutzer (2a-c) mit einer Code erzeugenden Vorrichtung (6a-c), wobei die Code erzeugende Vorrichtung Folgendes enthält:
ein Informationserfassungsmittel (51, 52); und
eine Verarbeitungsschaltung (60),
wobei das Verfahren folgende Schritte umfasst:
Empfangen (401) - über das Informationserfassungsmittel (51, 52) - eines durch den Transaktions-Serviceprovider (3) erzeugten transaktionsspezifischen Codes, wobei der transaktionsspezifische Code eine transaktionsspezifische Sequenz vorgegebener Funktionen codiert;
Auswerten des transaktionsspezifischen Codes;
Ausführen (402-404) - auf der Basis der Auswertung des transaktionsspezifischen Codes - der transaktionsspezifischen Sequenz vorgegebener Funktionen, die jeweils beinhalten, den Nutzer (2a-c) aufzufordern, einen jeweiligen funktionsbezogenen Wert anzugeben, was eine Sequenz funktionsbezogener, durch den Nutzer angegeben Werte zur Folge hat; und
Bestimmen eines Antwortcodes auf der Basis der Sequenz funktionsbezogener Werte, wodurch eine sichere Authentifizierung der Transaktion ermöglicht wird.

21. Computerprogrammmodul, das dafür konfiguriert ist, die Schritte des Verfahrens nach Anspruch 20 durchzuführen, wenn es in einer Verarbeitungsschaltung (60) ausgeführt wird, die in einer Code erzeugenden Vorrichtung (6a-c) nach einem der Ansprüche 1 bis 12 enthalten ist.

## Revendications

1. Dispositif générateur de code (6a-c) pour autoriser une transaction entre un utilisateur (2a-c) et un fournisseur de service de transaction (3) avec une commande dynamique d'un niveau de sécurité de la transaction sur la base d'un risque estimé de celle-ci, ledit dispositif générateur de code (6a-c) comportant:
un moyen d'acquisition d'information (51,52); et
un ensemble de circuits de traitement (60) configurés afin de:
recevoir, via ledit moyen d'acquisition d'information (51,52), un code spécifique à la transaction généré par ledit fournisseur de service de transaction (3) en liaison avec une demande de ladite transaction, ledit code spécifique à la transaction codant une séquence spécifique à la transaction de fonctions prédéterminées;
évaluer ledit code spécifique à la transaction;
exécuter, sur la base de ladite évaluation du code spécifique à la transaction, ladite séquence spécifique à la transaction de fonctions prédéterminées, impliquant chacune d'inciter ledit utilisateur (2a-c) à indiquer une valeur relative à une fonction respective, donnant une séquence de valeurs relatives à une fonction indiquées par l'utilisateur; et
déterminer un code de réponse spécifique à la transaction sur la base de ladite séquence de valeurs relatives à une fonction, en autorisant ainsi une authentification sécurisée de ladite transaction.

2. Dispositif générateur de cde (6a-c) selon la revendication 1, dans lequel:
ledit code spécifique à la transaction comprend un premier sous-code indicateur de ladite séquence spécifique à la transaction de fonctions prédéterminées et un second sous-code étant une fonction dudit premier sous-code; et
ledit ensemble de circuits de traitement (60) est en outre configuré afin d'évaluer ledit second sous-code afin de vérifier ainsi une exactitude dudit premier sous-code.

3. Dispositif générateur de code (6a-c) selon la revendication 1 ou 2,
dans lequel ledit ensemble de circuits de traitement (60) est en outre configuré afin d'interagir avec un module cryptographique (65) et d'utiliser ledit module cryptographique (65) pour déterminer ledit code de réponse spécifique à la transaction.

4. Dispositif générateur de code (6a-c) selon une quelconque des revendications précédentes, dans lequel ladite séquence de valeurs relatives à une fonction inclut un PIN dudit utilisateur.

5. Dispositif générateur de code (6a-c) selon une quelconque des revendications précédentes, dans lequel ladite séquence de valeurs relatives à une fonction inclut une valeur indicatrice d'une approbation d'utilisateur d'un message prédéterminé.

6. Dispositif générateur de code (6a-c) selon une quelconque des revendications précédentes, dans lequel ladite séquence de valeurs relatives à une fonction inclut en outre au moins une valeur relative à une transaction entrée dans ledit dispositif générateur de code (6a-c) par l'utilisateur (2a-c).

7. Dispositif générateur de code (6a-c) selon la revendication 1 ou 2,
dans lequel ledit moyen d'acquisition d'information comprend un moyen d'entrée d'utilisateur (51,52); et
ledit ensemble de circuits de traitement (60) est configuré afin d'interagir avec un module cryptographique (65),
dans lequel ledit ensemble de circuits de traitement (60) est en outre adapté afin de:
recevoir, via ledit moyen d'entrée d'utilisateur (51,52), un code spécifique à la transaction généré par ledit fournisseur de service de transaction (3);
évaluer ledit code spécifique à la transaction;
exécuter, sur la base de ladite évaluation du code spécifique à la transaction, une séquence spécifique à la transaction de fonctions prédétermines incluant de:
demander audit utilisateur d'indiquer au moins une valeur relative à la fonction via ledit moyen d'entrée d'utilisateur (51,52); et
demander audit utilisateur d'entrer un PIN; et
déterminer, en utilisant ledit module cryptographique (65), un code de réponse spécifique à la transaction sur la base de ladite valeur relative à la fonction et dudit PIN.

8. Dispositif générateur de code (6a-c) selon une quelconque des revendications précédentes, dans lequel:
ledit moyen d'acquisition d'information inclut une unité d'acquisition d'image (52); et
ledit ensemble de circuits de traitement (60) est en outre configuré afin d'acquérir, via ladite unité d'acquisition d'image (52), une image (74) fournie par ledit fournisseur de service de transaction (3), ladite image (74) codant ledit code spécifique à la transaction.

9. Dispositif générateur de code (6a-c) selon la revendication 8, dans lequel ladite image inclut un code barre (74).

10. Dispositif générateur de code (6a-c) selon une quelconque des revendications précédentes, configuré en outre afin de:
décrypter une information de transaction cryptée comprise dans ledit code spécifique à la transaction; et
afficher ladite information de transaction décryptée audit utilisateur au moyen d'une unité d'affichage (50) comprise dans ledit dispositif générateur de code (6a-c).

11. Dispositif générateur de code (6a-c) selon la revendication 7, comprenant en outre un connecteur pour connecter ledit ensemble de circuits de traitement (60) à un circuit électronique disposé de manière amovible comprenant ledit module cryptographique.

12. Dispositif générateur de code (6a-c) selon la revendication 7, dans lequel ledit module cryptographique (65) est compris dans ledit ensemble de circuits de traitement (60).

13. Système de serveur de transaction (3) comprenant:
une base de données (7) pour mémoriser des données d'utilisateur; une interface de réseau (9) pour autoriser une communication avec une pluralité de dispositifs de communication d'utilisateur (4a-c) par l'intermédiaire d'un réseau (5); et
un ensemble de circuits de traitement (8) pour effectuer des opérations de transaction, dans lequel ledit ensemble de circuits de traitement (8) est adapté afin de:
effectuer une estimation de risque pour une transaction demandée;
déterminer un code spécifique à la transaction sur la base de ladite estimation de risque, ledit code spécifique à la transaction comprenant un code indicateur d'une séquence de fonctions prédéterminées à exécuter par un dispositif générateur de code associé à un utilisateur ayant demandé ladite transaction;
transmettre à un desdits dispositifs de communication d'utilisateur (4a-c), duquel émanait ladite demande de transaction, ledit code spécifique à la transaction, en permettant ainsi l'affichage dudit code à l'utilisateur (2a-c) ayant demandé la transaction;
recevoir un code de réponse spécifique à la transaction généré par ledit dispositif générateur de code (6a-c) et basé sur une séquence de valeurs relatives à la fonction indiquées par l'utilisateur;
évaluer ledit code de réponse; et
si ledit code de réponse est valide, effectuer la transaction demandée.

14. Système de serveur de transaction (3) selon la revendication 13, dans lequel ledit ensemble de circuits de traitement (8) est configuré afin de coder ledit code spécifique à la transaction comme une image à afficher par ledit dispositif de communication d'utilisateur (4a-c).

15. Système de serveur de transaction (3) selon la revendication 14, dans lequel lesdites données d'image correspondent à un code barre.

16. Système de transaction sécurisé (1) comprenant:
un dispositif générateur de code (6a-c) selon une quelconque des revendications 1 à 12;
un système de serveur de transaction (3) selon une quelconque des revendications 13 à 15; et
un dispositif de communication d'utilisateur (4a-c) qui est en liaison avec ledit système de serveur de transaction (3) et configuré afin d'afficher des données à l'utilisateur (2a-c) et de recevoir dudit utilisateur une entrée relative à la transaction.

17. Système de transaction sécurisé (1) selon la revendication 16, dans lequel ledit dispositif de communication d'utilisateur (4a-c) est un ordinateur personnel.

18. Système de transaction sécurisé (1) selon la revendication 16, dans lequel ledit dispositif de communication d'utilisateur (4a-c) est un téléphone mobile.

19. Système de transaction sécurisé (1) selon la revendication 16, dans lequel ledit dispositif de communication d'utilisateur (4a-c) est un guichet automatique bancaire.

20. Procédé pour autoriser une interaction sécurisée entre un fournisseur de service de transaction (3) et un utilisateur (2a-c) comportant un dispositif générateur de code (6a-c), ledit dispositif générateur de code incluant:
un moyen d'acquisition d'information (51,52); et
un ensemble de circuits de traitement (60),
ledit procédé comprenant les étapes consistant à:
recevoir (401), via ledit moyen d'acquisition d'information (51,52), un code spécifique à la transaction généré par ledit fournisseur de service de transaction (3), ledit code spécifique à la transaction codant une séquence spécifique à la transaction de fonctions prédéterminées;
évaluer ledit code spécifique à la transaction;
exécuter (402-404), sur la base de ladite évaluation du code spécifique à la transaction, ladite séquence spécifique à la transaction de fonctions prédéterminées, impliquant chacune d'amener ledit utilisateur (2a-c) à indiquer une valeur relative à la fonction respective, donnant une séquence de valeurs relatives à la fonction indiquées par l'utilisateur; et
déterminer un code de réponse sur la base de ladite séquence de valeurs relatives à la fonction, en autorisant ainsi une authentification sécurisée de ladite transaction.

21. Module de programme informatique configuré afin d'effectuer les étapes du procédé selon la revendication 20 quand il est exécuté sur un ensemble de circuits de traitement (60) compris dans un dispositif générateur de code (6a-c) selon une quelconque des revendications 1 à 12.
